# FASCICULE DE BREVET EUROPEEN

(11) **EP 4 081 729 B1**
(45) Date de publication et mention de la délivrance du brevet: **06.12.2023**
(21) Numéro de dépôt: 20835839.0
(22) Date de dépôt: 22.12.2020
(51) Int. Cl.: F16L 58/08, C23C 4/04, C23C 4/06, C23C 4/11, C23C 4/12, C23C 4/129, C23C 4/131, E21B 17/042, F16L 57/06, F16L 58/18

(54) **TUBE REVÊTU RÉSISTANT À L'USURE DE CUVELAGE**
BOHRROHRVERSCHLEISSBESTÄNDIGES BESCHICHTETES ROHR
COATED PIPE RESISTANT TO CASING WEAR

(30) Priorité: 23.12.2019 FR 1915500
(43) Date de publication de la demande: 02.11.2022
(73) Titulaire: Vallourec Oil and Gas France, 59620 Aulnoye-Aymeries (FR)
(72) Inventeur: MENCAGLIA, Xavier, 92100 Boulogne-Billancourt (FR); MAILLON, Bertrand, 92100 Boulogne-Billancourt (FR)
(74) Mandataire: Casalonga
(86) Numéro de dépôt international: PCT/EP2020/087678
(87) Numéro de publication internationale: WO 2021/130253

(56) Documents cités:
- EP-A2- 2 172 577
- CN-A- 105 627 011
- FR-A1- 2 301 606

## Description

L'invention concerne les composants filetés tubulaires et plus particulièrement les tubes en acier pour le forage, l'exploitation des puits d'hydrocarbures ou pour le transport de pétrole et de gaz, ou pour les puits de géothermie ou de captation de CO₂.

Les puits de forage dans l'industrie du pétrole et du gaz sont généralement forés par étages. Une fois qu'un étage est foré, une colonne de tubes de cuvelage est mise en place pour fournir au puits de forage une stabilité de la paroi et en éviter l'effondrement ainsi que des fuites, lors du forage des étages supplémentaires. En raison de ce procédé de forage et de cuvelage par étages, les étages suivants sont à chaque fois plus profonds sous la surface et présentent une diminution du diamètre du puits de forage. Par exemple, un puits de quatre étages comprend quatre colonnes de cuvelages sensiblement concentriques et donc de quatre diamètres distincts. La dernière colonne est généralement une colonne dite colonne de tubage servant à l'extraction de la matière hors du puits.

On entend ici par "composant" tout élément ou accessoire utilisé pour forer ou exploiter un puits et comprenant au moins une connexion ou connecteur ou encore extrémité filetée, et destiné à être assemblé par un filetage à un autre composant pour constituer avec cet autre composant un joint fileté tubulaire. Le composant peut être par exemple un élément tubulaire de relativement grande longueur (notamment d'environ une dizaine de mètres de longueur), par exemple un tube, ou bien un manchon tubulaire de quelques dizaines de centimètres de longueur, ou encore un accessoire de ces éléments tubulaires (dispositif de suspension ou « hanger », pièce de changement de section ou « cross-over », vanne de sécurité, connecteur pour tige de forage ou « tool joint », « sub », et analogues).

Les composants tubulaires sont dotés d'extrémités filetées. Ces extrémités filetées sont complémentaires permettant le raccordement de deux éléments tubulaires mâle (« Pin ») et femelle (« Box ») entre eux, formant un joint. Il y a donc une extrémité filetée male et une extrémité filetée femelle. Les extrémités filetées dites premium ou semi-premium comportent généralement au moins une surface de butée. Une première butée peut être formée par deux surfaces libres sur les extrémités filetées configurées de façon à être en contact l'une avec l'autre à l'issue du vissage des extrémités filetées entre elles ou lors de sollicitations de compression. Les butées ont généralement des angles négatifs par rapport à l'axe principal des connexions.

Ces composants sont soumis à des sollicitations de traction ou de compression axiales, de pressions intérieures ou extérieures de fluide, de flexion ou encore de torsion, éventuellement combinées et d'intensité pouvant fluctuer. L'étanchéité doit être assurée malgré les sollicitations et malgré les conditions d'emploi rudes sur chantier. Les joints filetés doivent pouvoir être vissés et dévissés plusieurs fois sans dégradation de leurs performances, notamment par grippage. Après dévissage, les composants tubulaires peuvent être réutilisés dans d'autres conditions de service.

Le forage se fait avec une colonne de forage comprenant un train de tiges de forage. Lors du forage d'un puits de pétrole au-delà du premier étage, le train de tiges de forage s'étend dans une portion tubée du puits de forage et dans une portion non tubée du puits de forage. Lors du forage en dessous des portions tubées du puits de forage, le cuvelage peut s'user en raison du contact avec le train de tiges. Le forage implique non seulement le forage dans de nouvelles parties de la formation, mais aussi des opérations à mouvement de va-et-vient où le trépan de forage est déplacé vers le haut et vers le bas des parties nouvellement forées du puits de forage (parfois appelées « étages ») pour lisser la surface du puits de forage et fournir un puits de forage de diamètre uniforme. Comme le train de tiges effectue un mouvement de va-et-vient, le train de tiges proximal par rapport au trou vers le haut du tubage du trépan provoque une usure des tubes de cuvelage. Aussi, les mouvements de rotation du train de tiges de forage peuvent également provoquer des usures des tubes de cuvelage, phénomène encore plus prononcé dans un puits coudé.

L'usure des tubes cuvelage se traduit par une diminution de l'épaisseur des tubes, ce qui, à son tour, affaiblit ces tubes de cuvelage. Certains puits de pétrole, du fait de leur géométrie, du fait des techniques de forage, accentuent les phénomènes d'usure des tubes de cuvelage. Il a été constaté que cette usure est particulièrement préjudiciable au niveau de la connexion entre tubes. Il n'est pas possible d'augmenter l'épaisseur des tubes, ce qui conduit à augmenter la masse des tubes ce qui n'est pas souhaité. Il y a donc un besoin pour une solution qui augmente la résistance des tubes contre une usure interne.

EP2172577 A2 divulgue des composants de turbomachine avant des traitements de surface efficaces pour réduire l'accumulation de particules pendant l'utilisation.

FR 2 301 606 A1 divulgue une poudre composite de pulvérisation à la flamme permettant d'établir un revêtement dur pour une utilisation dans le domaine des paliers qui permettent de supporter et guider, en rotation, des arbres de transmission.

CN105627011 divulgue une technique de fabrication de tube, et concerne en particulier un coude mobile et son procédé de fabrication dans le domaine du transport de ciment.

On connaît par FR2742840 une conduite tubulaire dont l'extrémité est recouverte d'une couche protectrice au niveau de l'extrémité mâle, mais cette couche est de nature plastique et est disposée de manière à protéger le tube en acier contre l'attaque de produits corrosifs, mais ne permettent pas d'améliorer la résistance des tubes contre une usure interne due à l'abrasion d'un train de tubes en mouvement à l'intérieur du tube.

L'invention vient améliorer la situation.

L'invention est une conduite tubulaire en acier comprenant au moins une première extrémité filetée mâle, une surface interne et une couche de dépôt métallique sur la surface interne et d'épaisseur comprise entre 0,01 mm et 0,8 mm.

La couche de dépôt métallique peut avoir une dureté entre 35 HRC et 65 HRC.

La couche de dépôt métallique peut avoir une épaisseur comprise entre 0,05 mm et 0,75 mm.

La couche de dépôt métallique peut avoir une épaisseur comprise entre 0,05 et 0,2 mm.

Le dépôt métallique sur la surface interne du tube peut être au droit de l'extrémité filetée mâle.

Selon un premier mode de réalisation, la conduite tubulaire en acier peut être du type fileté et manchonné et que le revêtement métallique s'étend sur la surface interne de la conduite et sur une première portion de revêtement métallique au droit de la première extrémité filetée mâle, une deuxième portion de revêtement métallique au droit d'une deuxième extrémité mâle, et une troisième portion de revêtement métallique au droit de la section intermédiaire du manchon.

Selon un aspect, les première, deuxième, troisième portions de dépôt métallique peuvent s'étendre sur une distance comprise entre 0,1 et 1 mètre, ce qui permet de protéger les conduites contre une usure excessive précisément aux parties les plus sensibles à l'usure.

Selon une variation dans laquelle la conduite peut être du type fileté et manchonné, le revêtement métallique peut s'étendre sur la totalité de la surface interne de la conduite.

Dans un second mode de réalisation, la conduite peut être du type intégral et le revêtement métallique s'étend sur la surface interne de la conduite et sur une première portion de revêtement métallique au droit de la première extrémité filetée mâle, une deuxième portion de revêtement métallique s'étend depuis une extrémité femelle vers la première extrémité mâle, chaque portion s'étendant sur une distance comprise entre 0,1 et 1 mètre.

Selon une variation la conduite peut être du type intégral et le revêtement métallique s'étend sur toute la surface interne de la conduite.

Le revêtement peut être appliqué par une méthode de projection de métal, par projection à flamme à haute vitesse, ou par projection de métal par arc électrique entre deux fils, de façon à minimiser les évolutions micro-structurelles dans le substrat de base.

Selon un aspect, la conduite peut être un tube de puits de pétrole ou un tube de forage de puits de pétrole, ou un accessoire de colonne de puits de pétrole.

Selon un autre aspect, le revêtement métallique peut être choisi parmi les carbures de chrome ou carbures de tungstène dans une matrice cobalt ou cobalt-chrome ou dans une matrice de nickel ou nickel-chrome, comprenant en outre plus de 70% en masse de carbure de chrome ou de tungstène.

Alternativement, le revêtement métallique peut comprendre en pourcentage massique de 0,5 à 4% de Bore, jusqu'à 3% de carbone, jusqu'à 3% de chrome, de 2 à 25% de Molybdène ou tungstène, jusqu'à 20% de vanadium.

Le revêtement métallique peut être agencé pour avoir une résistance à l'abrasion plus importante que l'acier de base de la conduite tubulaire.

Le revêtement métallique peut avoir une porosité inférieure à 5%, préférentiellement inférieure à 1%.

Selon un aspect, une portion de paroi de la conduite comprenant le revêtement métallique présente des contraintes résiduelles substantiellement de même niveau que les contraintes résiduelles d'une portion de paroi de la conduite ne comprenant pas de revêtement métallique.

L'invention est aussi une méthode d'obtention d'une conduite tubulaire en acier comprenant une étape de projection métallique d'un dépôt sur la surface intérieure de la conduite.
[Fig 1] représente schématiquement un tube en vue de coupe selon un premier mode de réalisation de l'invention.
[Fig 2] représente schématiquement un tube en vue de coupe selon une variation du premier mode de réalisation de l'invention.
[Fig 3] représente schématiquement un tube en vue de coupe selon un deuxième mode de réalisation de l'invention.
[Fig 4] représente schématiquement un tube en vue de coupe selon une variation du deuxième mode de réalisation de l'invention.

Les figures ne sont pas à l'échelle, particulièrement dans le sens de la longueur des tubes, pour des raisons de praticité de représentation.

### Tube fileté & Manchonné

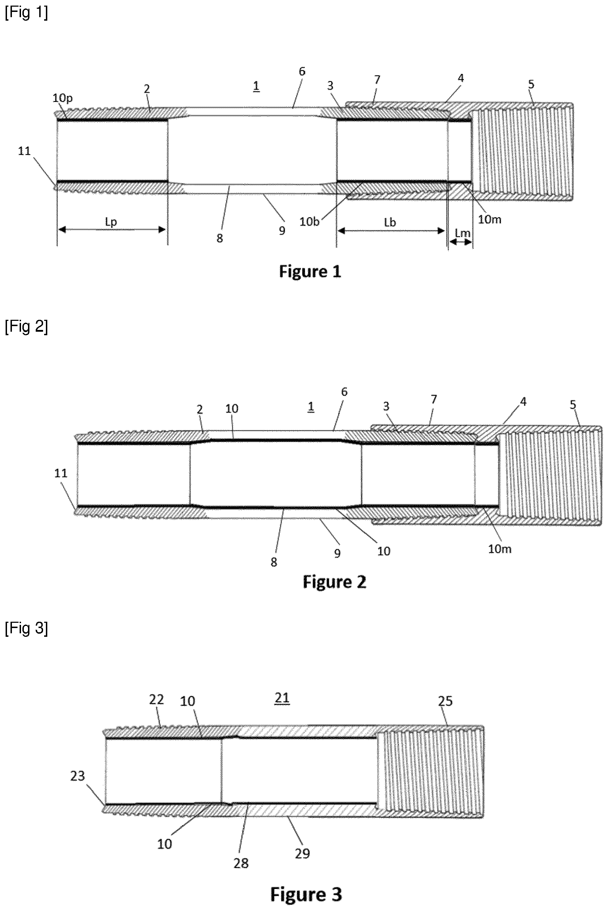

La figure 1 montre une vue en coupe d'un tube de cuvelage (1) du type fileté manchonné, muni d'une première connexion femelle (5) et d'une première connexion mâle (2). Le tube (1) comprend un premier tube (6) muni de deux connexions mâles (2, 3) et d'un manchon (4) muni de deux connexions femelles (5,7). Le manchon (4) comprend une section intermédiaire (14) ou talon présentant une surface manchonnée intérieure (15). Le premier tube (6) comprend une surface intérieure (8) et une surface extérieure (9). Le tube (6) comprend sur sa surface intérieure un revêtement métallique (10) au droit de la première connexion mâle (2), s'étendant depuis l'extrémité distale mâle (11) vers l'extrémité opposée sur une longueur de revêtement Lp. Le revêtement métallique (10) s'étend sur toute la circonférence de la portion de surface intérieure (8) revêtue.

La longueur de revêtement Lp est comprise entre 0,1 et 1 mètre. Alternativement, le revêtement métallique peut s'étendre sur toute la longueur du tube.

Le premier tube (1) comprend également un revêtement métallique (10b) au droit de la deuxième connexion mâle (3), s'étendant sur une deuxième longueur de revêtement Lb.

Le manchon (4) comprend également un revêtement métallique (10c) au niveau de la section intermédiaire (14). Ce revêtement s'étend sur une longueur axiale Lm.

L'épaisseur e du revêtement métallique (8) est comprise entre 0,01 et 0,8mm. Préférentiellement, l'épaisseur e est comprise entre 0,05 mm et 0,75 mm. Préférentiellement, l'épaisseur est comprise entre 0,05 et 0,2mm. Le revêtement métallique se distingue par sa nature et son épaisseur. L'épaisseur est choisie pour éviter de diminuer sensiblement le diamètre interne du tube, et préserver sa traversabilité par un train de tige ou des accessoires (appelée « drift)).

En particulier, le revêtement métallique est obtenu par projection de métal. Les techniques de projection de métal permettent de ne pas affecter la structure métallurgique de l'objet sur lequel est projeté le métal. Il est particulièrement important de ne pas modifier la structure métallurgique, au niveau de la connexion car c'est un élément critique de la tenue d'une colonne de tubes de cuvelage, et également au niveau du corps du tube pour ne pas dégrader la tenue mécanique de celui-ci, ou encore sa résistance à la corrosion. En effet, les tubes de cuvelage sont essentiellement des tubes sans soudure, une soudure affectant thermiquement la métallurgie et ayant donc une influence sur la résistance mécanique de l'objet faisant l'objet d'une soudure.

Le revêtement métallique est choisi parmi les carbures de chrome ou carbures de Tungstène, particulièrement carbures de tungstène dans une matrice Co ou Co-Cr, ou carbures de tungstène dans une matrice Ni / Ni-Cr, le revêtement comprenant, outre le tungstène, de 4 à 6% de carbone, de 3 à 6% de Chrome, de 8 à 12% de cobalt.

En particulier, un carbure de tungstène comprenant plus de 70% en masse de particules de tungstène, préférentiellement au moins 85% de carbure de tungstène dans une matrice cobalt chrome peut être utilisé, le revêtement comprenant, outre le tungstène, de 4 à 6% de carbone, de 3 à 6% de Chrome, de 8 à 12% de cobalt.

Un carbure de tungstène dans une matrice nickel chrome comprenant plus de 70% en masse de particules de tungstène, préférentiellement au moins 85% de carbure de tungstène, revêtement comprenant, outre le tungstène, de 4 à 6% de carbone, de 3 à 6% de Chrome, de 8 à 12% de cobalt.

Le revêtement métallique peut comprendre en pourcentage massique de 0,5 à 4% de Bore, jusqu'à 3% de carbone, jusqu'à 3% de chrome, de 2 à 25% de molybdène ou tungstène, jusqu'à 20% de vanadium. Dans un tel revêtement, de préférence, le ratio massique de molybdène et de tungstène rapporté au bore est compris entre 6 et 10,25. Un tel revêtement a pour avantage d'abaisser très significativement les émanations de chrome lors du dépôt et d'être plus vertueux pour l'environnement.

Ainsi, le dépôt métallique (10) peut être agencé pour avoir une résistance à l'abrasion plus importante que l'acier de base de la conduite tubulaire (1, 21).

Par ailleurs, le dépôt métallique (10) peut être agencé pour avoir une porosité inférieure à 5%, préférentiellement inférieure à 1%.

De préférence, le revêtement métallique (8) a une dureté comprise entre 35 HRC et 65 HRC. De préférence encore, la dureté est supérieure à 45HRC. Une dureté élevée permet une meilleure résistance à l'usure. Une dureté doit être au plus de 65 HRC pour éviter une usure prématurée du train de tiges de forage évoluant à l'intérieur du tube.

L'invention permet d'apporter une résistance du composant tubulaire à l'usure de cuvelage en ne compromettant pas le passage de composants à l'intérieur (« Drift ») et en ne compromettant pas les performances de la connexion.

Les tubes de cuvelage ont un diamètre interne compris entre 100mm et 508mm. Préférentiellement, les tubes de cuvelage ont un diamètre interne compris entre 150 et 400mm. Le composant tubulaire de cuvelage a une longueur comprise entre 0,01 et 15m.

### Tube intégral

Dans un autre mode de réalisation représenté en figure 3, un tube de cuvelage (21) est du type intégral, c'est-à-dire composé d'un seul élément, et est muni d'une première connexion femelle (25) et d'une première connexion mâle (22). Le tube (21) comprend une surface intérieure (28) et une surface extérieure (29). Le tube (21) comprend sur sa surface intérieure un revêtement métallique (10), présent au droit de la première connexion mâle (22), s'étendant depuis l'extrémité distale mâle (23) vers l'extrémité opposée femelle (25). Le revêtement métallique (27) s'étend sur toute la circonférence de la portion de surface intérieure (28) et le revêtement métallique (10) s'étend sur toute la longueur du tube (21).

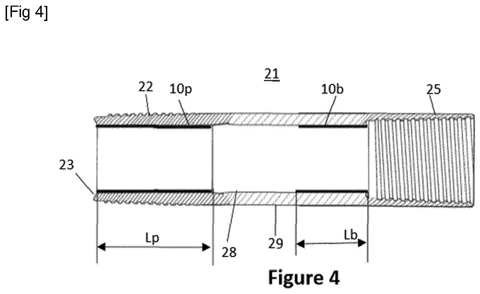

Dans une variation de ce mode de réalisation visible en figure 4, un tube de cuvelage (21) est du type intégral, c'est-à-dire composé d'un seul élément, et est muni d'une première connexion femelle (25) et d'une première connexion mâle (22). Le tube (21) comprend une surface intérieure (28) et une surface extérieure (29). Le tube (21) comprend sur sa surface intérieure une première portion de revêtement métallique (10p) au droit de la première connexion mâle (22), s'étendant depuis l'extrémité distale mâle (23) vers l'extrémité opposée sur une longueur de revêtement Lp. Le revêtement métallique (10p) s'étend sur toute la circonférence de la portion de surface intérieure (28) revêtue.

Le tube de cuvelage (21) comprend également sur sa surface intérieure (28) une deuxième portion de revêtement métallique (10b) s'étendant depuis la connexion femelle (25) vers l'autre extrémité sur une distance prédéterminée Lb.

La longueur (Lb) de la deuxième portion de revêtement métallique (10b) s'étendant depuis la connexion femelle (25) est comprise entre 0,1 et 1 mètre, et la première portion de revêtement métallique (10p) s'étend depuis la connexion mâle sur une deuxième longueur Lb comprise entre 0,1 et 1 mètre. Préférentiellement les longueurs Lb et Lp sont de au moins 0,2 mètre.

Le revêtement métallique (10, 10p, 10b, 10m) est absent de la surface de filetages intérieurs.

### Procédé

L'invention porte également sur un procédé d'obtention d'un tube de cuvelage résistant à l'usure de cuvelage.

Dans une première étape, la surface intérieure (8) du tube est préparée. Préférentiellement la préparation se fait par sablage. Ainsi, l'accroche du revêtement interne est améliorée. Alternativement, la préparation peut se faire par usinage, notamment par tournage.

Dans une seconde étape, un revêtement métallique est appliqué par projection de métal sur la surface intérieure (8) du tube.

La projection de métal peut se faire par projection à flamme à haute vitesse (appelée « HVOF : High Velocity Oxy Fuel »). Ce procédé utilise de l'oxygène, un combustible gazeux ainsi qu'un matériau d'apport (poudre) qui sera projetée. La température de projection pour cette technique est assez faible et permet également d'obtenir des revêtements de grande densité et une forte adhérence. Ce procédé est particulièrement adapté à un revêtement appliqué uniquement à une portion au droit d'une connexion mâle.

Alternativement ou en complément, la projection de métal peut se faire par arc électrique entre deux fils métalliques (appelée « TWAS : Twin Wire Arc Spray »). Le métal fondu est propulsé par de l'air comprimé et atomisé sur le substrat pour former un revêtement. Cette technique est rapide et est plus indiquée pour appliquer un revêtement métallique le long du corps d'un tube de cuvelage, sur une grande surface.

En complément, la projection de métal peut se faire par « Cold Spray », procédé de projection de poudre chauffée et projetée à très grande vitesse. Cette technique est complexe mais apporte une performance améliorée en dureté, porosité du revêtement.

Cette méthode est rapide et est compatible d'une mise en oeuvre industrielle.

Avantageusement, la matière du tube sur une section de paroi sur laquelle est déposée le revêtement métallique présente des contraintes résiduelles substantiellement de même niveau que les contraintes résiduelles d'une portion de paroi de la conduite ne comprenant pas de revêtement métallique. Autrement dit, le dépôt de matière n'entraîne pas la création de contrainte supplémentaire dans le matériau de base ou substrat.

L'épaisseur fine du revêtement permet d'obtenir que la connexion et le tube avec revêtement interne seront plus performants que la connexion et le tube sans revêtement interne car l'usure est nettement plus importante dans ce dernier cas.

Avantageusement encore, le revêtement peut être appliqué avant l'usinage de surfaces fonctionnelles de la connexion, telles que un filetage, une surface d'étanchéité, une surface de butée, ou bien après usinage des surfaces fonctionnelles de la connexion sans que le fait d'applique le revêtement avant ou après usinage n'ait d'influence significative sur les propriétés mécaniques de la connexion

Ce revêtement selon l'invention est particulièrement efficace dans le cas de tubes avec connexion premium, ensemble qui est plus sensible aux problématiques d'usure de cuvelage.

## Revendications

1. Conduite tubulaire en acier (1, 21) pour le forage, l'exploitation des puits d'hydrocarbures ou pour le transport de pétrole et de gaz, ou pour les puits de géothermie ou de captation de CO2, comprenant au moins une première extrémité filetée mâle, une surface interne (8, 28) et une couche de dépôt métallique (10, 10p, 10b, 10m) sur la surface interne (8, 28) et d'épaisseur comprise entre 0,05 mm et 0,75 mm.

2. Conduite tubulaire en acier (1, 21) selon la revendication 1 dans laquelle la couche de dépôt métallique (10, 10p, 10b, 10m) a une dureté entre 35 HRC et 65 HRC.

3. Conduite tubulaire en acier (1, 21) selon l'une des revendications 1 ou 2 dans laquelle la couche de dépôt métallique (10) a une épaisseur comprise entre 0,05 et 0,2 mm

4. Conduite tubulaire en acier (1, 21) selon l'une des revendications précédentes dans laquelle le dépôt métallique (10) sur la surface interne (8) du tube est au droit de l'extrémité filetée mâle.

5. Conduite tubulaire en acier (1) selon l'une des revendications précédentes dans laquelle la conduite est du type fileté et manchonné et que le revêtement métallique s'étend (10, 10p, 10b, 10m) sur la surface interne de la conduite et sur une première portion de revêtement métallique (10p) au droit de la première extrémité filetée mâle, une deuxième portion de revêtement métallique (10b) au droit d'une deuxième extrémité mâle, et une troisième portion de revêtement métallique (10m) au droit de la section intermédiaire du manchon (4).

6. Conduite tubulaire en acier (1) selon l'une des revendications précédentes dans laquelle la conduite est du type fileté et manchonné et que le revêtement métallique s'étend (10, 10p, 10b, 10m) sur la totalité de la surface interne (8) de la conduite.

7. Conduite tubulaire en acier (1, 21) selon la revendication 5 dans laquelle les première, deuxième, troisième portions de dépôt métallique (10, 10p, 10b, 10m) s'étendent sur une distance comprise entre 0,1 et 1 mètre.

8. Conduite tubulaire en acier (21) selon l'une des revendications 1 à 4 dans laquelle la conduite est du type intégral et que le revêtement métallique s'étend (10, 10p, 10b,) sur la surface interne (28) de la conduite et sur une première portion de revêtement métallique (10p) au droit de la première extrémité filetée mâle, une deuxième portion de revêtement métallique (10b) s'étend depuis une extrémité femelle vers la première extrémité mâle, chaque portion s'étendant sur une distance comprise entre 0,1 et 1 mètre.

9. Conduite tubulaire en acier (21) selon l'une des revendications 1 à 4 dans laquelle la conduite est du type intégral et que le revêtement métallique s'étend (10, 10p, 10b) sur toute la surface interne (28) de la conduite.

10. Conduite tubulaire en acier (1, 21) selon l'une des revendications précédentes dans laquelle le revêtement est appliqué par une méthode de projection de métal, par projection à flamme à haute vitesse, ou par projection de métal par arc électrique entre deux fils.

11. Conduite tubulaire en acier (1, 21) selon l'une des revendications précédentes **caractérisée en ce que** la conduite est un tube de puits de pétrole ou un tube de forage de puits de pétrole, ou un accessoire de colonne de puits de pétrole.

12. Conduite tubulaire en acier (1, 21) selon l'une des revendications précédentes **caractérisée en ce que** le revêtement métallique (10, 10p, 10b, 10m) est choisi parmi les carbures de chrome ou carbures de tungstène dans une matrice cobalt ou une matrice cobalt-chrome ou dans une matrice de nickel ou nickel-chrome, ledit revêtement comprenant en outre plus de 70% en masse de carbure de chrome ou de tungstène.

13. Conduite tubulaire en acier (1, 21) selon l'une des revendications précédentes **caractérisée en ce que** le revêtement métallique (10, 10p, 10b, 10m) comprend en pourcentage massique de 0,5 à 4% de Bore, jusqu'à 3% de carbone, jusqu'à 3% de chrome, de 2 à 25% de Molybdène ou tungstène, jusqu'à 20% de vanadium.

14. Conduite tubulaire en acier (1, 21) selon l'une des revendications précédentes **caractérisée en ce que** le revêtement métallique (10, 10p, 10b, 10m) est agencé pour avoir une résistance à l'abrasion plus importante que l'acier de base de la conduite tubulaire (1, 21).

15. Conduite tubulaire en acier (1, 21) selon l'une des revendications précédentes **caractérisée en ce que** le revêtement métallique (10, 10p, 10b, 10m) a une porosité inférieure à 5%, préférentiellement inférieure à 1%.

16. Conduite tubulaire en acier (1, 21) selon l'une des revendications précédentes **caractérisée en ce qu'**une portion de paroi de la conduite (1, 21) comprenant le revêtement métallique (10, 10p, 10b, 10m) présente des contraintes résiduelles substantiellement de même niveau que les contraintes résiduelles d'une portion de paroi de la conduite ne comprenant pas de revêtement métallique.

17. Méthode d'obtention d'une conduite tubulaire en acier selon l'une des revendications précédentes et comprenant une étape de projection métallique d'un dépôt sur la surface intérieure de la conduite (1, 21).

## Patentansprüche

1. Rohrleitung aus Stahl (1, 21) zum Bohren, zur Erschließung von Kohlenwasserstoff-Bohrlöchern oder zum Transport von Erdöl und Gas oder für geothermische Bohrlöcher oder Bohrlöcher zur Speicherung von CO2, die mindestens ein erstes Außengewindeende, eine Innenfläche (8, 28) und eine Metallauflageschicht (10, 10p, 10b, 10m) auf der Innenfläche (8, 28) und mit einer Dicke zwischen 0,05 mm und 0,75 mm umfasst.

2. Rohrleitung aus Stahl (1, 21) nach Anspruch 1, wobei die Metallauflageschicht (10, 10p, 10b, 10m) eine Härte zwischen 35 HRC und 65 HRC aufweist.

3. Rohrleitung aus Stahl (1, 21) nach Anspruch 1 oder 2, wobei die Metallauflageschicht (10) eine Stärke zwischen 0,05 und 0,2 mm aufweist.

4. Rohrleitung aus Stahl (1, 21) nach einem der vorhergehenden Ansprüche, wobei die Metallschicht (10) auf der Innenfläche (8) des Rohrs im Bereich des Außengewindeendes liegt.

5. Rohrleitung aus Stahl (1) nach einem der vorhergehenden Ansprüche, wobei die Leitung eine Gewinde-und Muffenleitung ist und wobei sich die Metallbeschichtung auf der Innenfläche der Leitung und auf einem ersten Abschnitt der Metallbeschichtung (10p) im Bereich des ersten Außengewindeendes, einem zweiten Abschnitt der Metallbeschichtung (10b) im Bereich eines zweiten Außenendes und einem dritten Abschnitt der Metallbeschichtung (10m) im Bereich des Zwischenabschnitts der Muffe (4) erstreckt (10, 10p, 10b, 10m) .

6. Rohrleitung aus Stahl (1) nach einem der vorhergehenden Ansprüche, wobei die Leitung eine Gewinde-und Muffenleitung ist und wobei sich die Metallbeschichtung auf der gesamten Innenfläche (8) der Leitung erstreckt (10, 10p, 10b, 10m).

7. Rohrleitung aus Stahl (1, 21) nach Anspruch 5, wobei sich der erste, zweite und dritte Abschnitt der Metallschicht (10, 10p, 10b, 10m) über ein Stück mit einer Länge zwischen 0,1 und 1 Meter erstreckt.

8. Rohrleitung aus Stahl (21) nach einem der Ansprüche 1 bis 4, wobei die Leitung eine einstückige Leitung ist und sich die Metallbeschichtung auf der Innenfläche (28) der Leitung und auf einem ersten Abschnitt der Metallbeschichtung (10p) im Bereich des ersten Außengewindeendes erstreckt, sich ein zweiter Abschnitt der Metallbeschichtung (10b) von einem Innenende aus hin zum ersten Außenende erstreckt, sich jeder Abschnitt über ein Stück mit einer Länge zwischen 0,1 und 1 Meter erstreckt (10, 10p, 10b).

9. Rohrleitung aus Stahl (21) nach einem der Ansprüche 1 bis 4, wobei die Leitung eine einstückige Leitung ist und sich die Metallbeschichtung auf der gesamten Innenfläche (28) der Leitung erstreckt (10, 10p, 10b).

10. Rohrleitung aus Stahl (1, 21) nach einem der vorhergehenden Ansprüche, wobei die Beschichtung mit einem Metallspritzverfahren, mittels Hochgeschwindigkeits-Flammspritzen oder mittels Metallspritzen in einem Lichtbogen zwischen zwei Drähten aufgebracht wird.

11. Rohrleitung aus Stahl (1, 21) nach einem der vorhergehenden Ansprüche, **dadurch gekennzeichnet, dass** die Leitung ein Rohr für Erdöl-Bohrlöcher oder ein Bohrrohr für Erdördbohrlöcher oder ein Zubehörteil für einen Erdölbohrstrang ist.

12. Rohrleitung aus Stahl (1, 21) nach einem der vorhergehenden Ansprüche, **dadurch gekennzeichnet, dass** die Metallbeschichtung (10, 10p, 10b, 10m) aus Chromcarbiden oder Wolframcarbiden in einer Cobaltmatrix oder einer Cobalt-Chrom-Matrix oder in einer Nickel- oder Nickel-Chrom-Matrix ausgewählt ist, wobei die Beschichtung ferner mehr als 70 Masse-% Chrom- oder Wolframcarbid umfasst.

13. Rohrleitung aus Stahl (1, 21) nach einem der vorhergehenden Ansprüche, **dadurch gekennzeichnet, dass** die Metallbeschichtung (10, 10p, 10b, 10m) 0,5 bis 4 Masse-% Bor, bis zu 3 Masse-% Kohlenstoff, bis zu 3 Masse-% Chrom, von 2 bis 25 Masse-% Molybdän oder Wolfram, bis zu 20 Masse-% Vanadium umfasst.

14. Rohrleitung aus Stahl (1, 21) nach einem der vorhergehenden Ansprüche, **dadurch gekennzeichnet, dass** die Metallbeschichtung (10, 10p, 10b, 10m) so angeordnet ist, dass sie eine höhere Verschleißbeständigkeit als der Basisstahl der Rohrleitung (1, 21) aufweist.

15. Rohrleitung aus Stahl (1, 21) nach einem der vorhergehenden Ansprüche, **dadurch gekennzeichnet, dass** die Metallbeschichtung (10, 10p, 10b, 10m) eine Porosität von unter 5%, vorzugsweise unter 1% aufweist.

16. Rohrleitung aus Stahl (1, 21) nach einem der vorhergehenden Ansprüche, **dadurch gekennzeichnet, dass** ein Abschnitt der Wand der Leitung (1, 21), der die Metallbeschichtung (10, 10p, 10b, 10m) umfasst, Restspannungen aufweist, die im Wesentlichen genauso hoch sind wie die Restspannungen eines Abschnitts der Wand der Leitung, der keine Metallbeschichtung umfasst.

17. Verfahren zum Erhalten einer Rohrleitung aus Stahl nach einem der vorhergehenden Ansprüche, das einen Schritt zum Metallspritzen einer Schicht auf der Innenfläche der Leitung (1, 21) umfasst.

## Claims

1. Steel tubular pipe (1, 21) for the drilling, the exploitation of hydrocarbon wells or for the transport of oil and gas, or for geothermal or CO2 capture wells, comprising at least one first male threaded end, an inner surface (8, 28) and a metal deposition layer (10, 10p, 10b, 10m) over the inner surface (8, 28) and of thickness between 0.05 mm and 0.75 mm.

2. Steel tubular pipe (1, 21) according to claim 1 wherein the metal deposition layer (10, 10p, 10b, 10m) has a hardness between 35 HRC and 65 HRC.

3. Steel tubular pipe (1, 21) according to one of claims 1 or 2 wherein the metal deposition layer (10) has a thickness between 0.05 and 0.2 mm

4. Steel tubular pipe (1, 21) according to one of the preceding claims wherein the metal deposit (10) over the inner surface (8) of the pipe is in line with the male threaded end.

5. Steel tubular pipe (1) according to one of the preceding claims wherein the pipe is of the threaded and sleeved type and that the metal coating (10, 10p, 10b, 10m) extends over the inner surface of the pipe and over a first metal coating portion (10p) in line with the first male threaded end, a second metal coating portion (10b) in line with a second male end, and a third metal coating portion (10m) in line with the intermediate section of the sleeve (4).

6. Steel tubular pipe (1) according to one of the preceding claims wherein the pipe is of the threaded and sleeved type and that the metal coating (10, 10p, 10b, 10m) extends over all of the inner surface (8) of the pipe.

7. Steel tubular pipe (1, 21) according to claim 5 wherein the first, second, third metal deposition portions (10, 10p, 10b, 10m) extend over a distance between 0.1 and 1 metre.

8. Steel tubular pipe (21) according to one of claims 1 to 4 wherein the pipe is of the integral type and the metal coating (10, 10p, 10b,) extends over the inner surface (28) of the pipe and over a first metal coating portion (10p) in line with the first male threaded end, a second metal coating portion (10b) extends from a female end towards the first male end, each portion extending over a distance between 0.1 and 1 metre.

9. Steel tubular pipe (21) according to one of claims 1 to 4 wherein the pipe is of the integral type and that the metal coating (10, 10p, 10b) extends over the entire inner surface (28) of the pipe.

10. Steel tubular pipe (1, 21) according to one of the preceding claims wherein the coating is applied by a metal spraying method, by high velocity oxy fuel, or by twin wire arc spray.

11. Steel tubular pipe (1, 21) according to one of the preceding claims, **characterised in that** the pipe is an oil well pipe or an oil well drill pipe, or an oil well string accessory.

12. Steel tubular pipe (1, 21) according to one of the preceding claims **characterised in that** the metal coating (10, 10p, 10b, 10m) is chosen from chromium carbides or tungsten carbides in a cobalt matrix or a cobalt-chromium matrix or in a nickel or nickel-chromium matrix, said coating further comprising more than 70% in weight of chromium or tungsten carbide.

13. Steel tubular pipe (1, 21) according to one of the preceding claims **characterised in that** the metal coating (10, 10p, 10b, 10m) comprises in weight percentage 0.5 to 4% of boron, up to 3% of carbon, up to 3% of chromium, 2 to 25% of molybdenum or tungsten, up to 20% of vanadium.

14. Steel tubular pipe (1, 21) according to one of the preceding claims **characterised in that** the metal coating (10, 10p, 10b, 10m) is arranged to have a resistance to abrasion more significant than the base steel of the tubular pipe (1, 21).

15. Steel tubular pipe (1, 21) according to one of the preceding claims **characterised in that** the metal coating (10, 10p, 10b, 10m) has a porosity less than 5%, preferably less than 1%.

16. Steel tubular pipe (1, 21) according to one of the preceding claims **characterised in that** a wall portion of the pipe (1, 21) comprising the metal coating (10, 10p, 10b, 10m) has residual stresses substantially of the same level as the residual stresses of a wall portion of the pipe not comprising metal coating.

17. Method for obtaining a steel tubular pipe according to one of the preceding claims and comprising a step of metal spraying of a deposit on the inner surface of the pipe (1, 21).
